# EUROPÄISCHE PATENTSCHRIFT

(11) **EP 3 918 221 B1**
(45) Veröffentlichungstag und Bekanntmachung des Hinweises auf die Patenterteilung: **13.08.2025**
(21) Anmeldenummer: 20702428.2
(22) Anmeldetag: 24.01.2020
(51) Int. Cl.: F16F 1/02

(54) **KUNSTSTOFFFEDER**
PLASTIC SPRING
RESSORT EN MATIÈRE PLASTIQUE

(30) Priorität: 29.01.2019 DE 102019102186; 28.11.2019 DE 102019132345
(43) Veröffentlichungstag der Anmeldung: 08.12.2021
(73) Patentinhaber: RPC Bramlage GmbH, 49393 Lohne (DE)
(72) Erfinder: PRESCHE, Martin, 49413 Dinklage (DE); GÖTTKE, Sabine, 49393 Lohne (DE)
(74) Vertreter: Müller, Enno
(86) Internationale Anmeldenummer: PCT/EP2020/051698
(87) Internationale Veröffentlichungsnummer: WO 2020/156933

(56) Entgegenhaltungen:
- WO-A1-2009/094793
- WO-A1-2018/126397
- DE-B4- 102005 063 497
- FR-A1- 2 969 241
- US-A1- 2009 102 106
- US-B2- 9 826 797

## Beschreibung

### Gebiet der Technik

Die Erfindung betrifft eine Kunststofffeder nach den Merkmalen des Oberbegriffs des Anspruches 1.

### Stand der Technik

Eine Kunststofffeder der in Rede stehenden Art ist beispielsweise aus der JP 4759432 B2 bekannt. Diese Feder weist neben dem oberen und dem unteren Federring einen koaxial zur Längsachse und parallel zu dem oberen und dem unteren Federring ausgerichteten Zwischenring auf. Jeweils zwischen dem unteren Federring und dem Zwischenring wie auch zwischen dem Zwischenring und dem oberen Federring erstrecken sich Federbeine, die, in Umfangsrichtung betrachtet, sich jeweils um 90 Grad bis hin zu etwa 180 Grad erstrecken, wobei einem in den Zwischenring einlaufenden Ende eines Federbeines zwischen dem unteren Federring und dem Zwischenring ein auslaufendes Ende eines zwischen dem Zwischenring und dem oberen Federring sich erstreckenden Federbeines zugeordnet ist.

Aus der WO 2018/126397 A1 ist eine Kunststofffeder bekannt, die einer Mehrzahl von übereinander angeordneten wellenförmigen Zwischenringen aufweist, die jeweils unmittelbar ineinander übergehend ausgebildet sind. Aus der US 2009/0102106 A1 ist eine Kunststofffeder mit einem Zwischenring und jeweils zwei spiralförmig verlaufenden Federbeinen bekannt, deren Anbindungen an den Zwischenring auch gegeneinander um 180° versetzt sind. Aus der FR 2969241 A1 ist eine Kunststofffeder bekannt mit sich weniger als 90° über den Umfang erstreckenden Zwischenbeinen, die im Wesentlichen in einer Seitenansicht gerade verlaufend sind und mit unverändertem Querschnitt in die Zwischenringe einlaufen. Aus der WO 2009/094793 A1 ist eine Kunststofffeder bekannt, bei welcher zwischen einem oberen und einem unteren Federring zwei gegensinnig gekrümmt verlaufende Zwischenringe ausgebildet sind, die durch gerade verlaufende, gegenüberliegend ausgebildete Federbeine miteinander verbunden sind. Die Zwischenringe und die Federringe weisen in Axialrichtung eine gleiche Breite auf. Aus der DE 10 2005 063 497 B4 ist eine Kunststofffeder bekannt, die nur ein vergleichsweise sehr breites, spiralförmig verlaufendes Federbein aufweist. Aus der US 9826797 B2 ist eine bei einem Schuh eingesetzte Kunststofffeder bekannt. Zwischen zwei Federringen erstrecken sich geneigt verlaufende Federbeine.

Eine solche Kunststofffeder kann, wie auch bevorzugt, einstückig und materialeinheitlich beispielsweise im Kunststoff-Spritzverfahren hergestellt sein.

### Zusammenfassung der Erfindung

Ausgehend von dem dargelegten Stand der Technik beschäftigt sich die Erfindung mit der Aufgabe, eine Kunststofffeder anzugeben, die insbesondere hinsichtlich einer Kraftentwicklung im Zuge eines Einfederns vorteilhaft ausgebildet ist.

Diese Aufgabe ist beim Gegenstand des Anspruches 1 gelöst. Bevorzugte Ausführungsformen der Erfindung ergeben sich aus den abhängigen Ansprüchen.

Es ergeben sich so in einer Ausführungsform im Übergangsbereich von dem Federbein in den jeweiligen Federring fußartige Verbreiterungsbereiche, mit einer jeweiligen Breite, die die übliche Breite des Federbeines etwa mittig in einem frei sich zwischen dem unteren und dem oberen Federring erstreckenden Federbeinabschnitt deutlich überschreitet. So kann eine diesbezügliche Breite beispielsweise dem 1,5-Fachen oder mehr, weiter beispielsweise bis hin zu einem 5-Fachen der etwa in der Mitte der Längserstreckung des Federbeines gemessenen Breite entsprechen. Dieser mittlere Federbeinabschnitt kann dabei, wie auch bevorzugt, eine diesbezüglich geringste Breite senkrecht zu der Mittenlängsachse des Federbeines aufweisen.

Darüber hinaus kann die im Einlaufbereich sich ergebende Breite weiter beispielsweise etwa einem 1,8- bis 2,5-Fachen, weiter etwa einem 2-Fachen der Breite im mittleren Bereich des Federbeines entsprechen.

Zufolge der vorgeschlagenen Ausgestaltung ergibt sich insbesondere im Hinblick auf die Kraftentwicklung, darüber hinaus jedenfalls aber auch bezüglich einer plastischen Verformung ein günstiges Verhalten der Kunststofffeder. So ergibt sich insbesondere zufolge der verbreiterten Einlaufbereiche eine günstigere Krafteinleitungen aus den Federringen in die Federbeine und umgekehrt.

Die dem gekrümmten Verlauf folgende Mittellängsachse des Federbeines kann sich unmittelbar im Einlaufbereich im Wesentlichen senkrecht zur Umfangserstreckung des nachfolgenden Federringes erstrecken, entsprechend weiter bevorzugt zumindest annähernd raumparallel zur Längsachse der Kunststofffeder insgesamt. Hierbei kann die Mittellängsachse unmittelbar im Einlaufbereich des Federbeines in den Federring auch einen spitzen Winkel von wenigen Winkelgraden, beispielsweise von 0,1 bis 10 Grad, zu einer den Einlaufpunkt der Mittellängsachse in den Federring schneidenden, parallel zur Längsachse der Kunststofffeder verlaufenden Linie einschließen.

In jedem Fach können sich zwischen einem Federring und einem Zwischenring sowie zwischen zwei in Erstreckungsrichtung der Längsachse unmittelbar aufeinander folgenden Zwischenringen über den Umfang verteilt mindestens vier Federbeine erstrecken. Die Federbein-Anordnung kann entsprechend in jedem Fach zumindest hinsichtlich der Anzahl und Ausgestaltung der Federbeine gleich sein.

So kann sich gemäß einer möglichen Ausgestaltung zwischen dem unteren Federring und dem oberen Federring drei Zwischenringe erstrecken, die über die Erstreckung der Längsachse betrachtet gleichmäßig zueinander und auch gleichmäßig zu dem oberen beziehungsweise unteren Federring beabstandet sein können.

Auch können über den Umfang gleichmäßig verteilt vier bis beispielsweise zwölf Federbeine, weiter beispielsweise, wie auch bevorzugt, sechs bis zehn Federbeine, insbesondere acht Federbeine vorgesehen sein.

Bezüglich des angegebenen gegensinnig gekrümmten Verlaufes zweier Zwischenringe, die entlang beziehungsweise in Richtung der Längsachse betrachtet unmittelbar aufeinander folgen, ergibt sich dies beispielsweise bei einer Projektion der Zwischenringe in eine Ebene, in welcher Ebene sich die Längsachse als Linie darstellt.

So kann in Richtung der Längsachse betrachtet ein (erster) Zwischenring mit Bezug auf die Blickrichtung eine konvexe Krümmung aufweisen, während der in derselben Blickrichtung nachfolgende (zweite) Zwischenring einen konkaven Krümmungsverlauf aufweisen kann. Auch kann, bezogen auf das vorbeschriebene Beispiel, der erste Zwischenring beispielsweise konkav gekrümmt sein, während der nachfolgende zweite Zwischenring einen konvexen Krümmungsverlauf aufweisen kann.

Die jeweilige Krümmung der aufeinanderfolgenden Zwischenringe kann, über den Umfang betrachtet, gleichmäßig, alternativ aber auch ungleichmäßig gegeben sein, wobei weiter die jeweilige Steigung beziehungsweise der Steigungsverlauf der aufeinander folgenden Zwischenringe unter Berücksichtigung der Gegenläufigkeit gleich gestaltet sein kann. Alternativ ist diesbezüglich auch ein unterschiedlicher Steigungsverlauf möglich.

Über die Erstreckung der Längsachse betrachtet kann die Kunststofffeder auch mehrere Paare von aufeinander folgenden Zwischenringen mit gegensinnig gekrümmtem Verlauf aufweisen.

Zudem kann ein Zwischenring in einer möglichen Projektion in die vorbeschriebene Ebene eine konkave oder konvexe Krümmung aufweisen, während in einer weiteren Projektion in eine um die Längsachse um 90 Grad gedrehten Ebene dieser Zwischenring entgegengesetzt gekrümmt, entsprechend konvex oder konkav verlaufend ausgebildet sein kann. So kann sich weiter über den Umfang betrachtet ein wellenförmiger Verlauf eines Zwischenringes ergeben.

Bei einer bevorzugt gleichen Ausgestaltung der in Längsrichtung aufeinander folgenden Zwischenringe kann die vorbeschriebene gegenläufige Krümmung durch eine relative Versetzung des einen Zwischenringes zu dem anderen Zwischenring in Umfangsrichtung um die Längsachse erreicht sein, so beispielsweise, wie auch bevorzugt, zufolge einer Umfangsversetzung um 90 Grad.

Der Einlaufbereich zwischen einem Federbein und einem Federring, gegebenenfalls aber auch zwischen Federbein und Zwischenring, gesehen von radial außen und bezogen auf eine Umfangsrichtung des Federringes (beziehungsweise Zwischenringes), kann auf einer Seite einen ersten Einlaufradius aufweisen und in Umfangsrichtung gegenüberliegend einen zweiten Einlaufradius, wobei der zweite Einlaufradius deutlich kleiner ist als der erste Einlaufradius.

Die Einlaufradien können hierbei wenige Millimeter bis hin zu 10 oder 15 mm betragen, so weiter beispielsweise 2, 3 oder 5 mm oder auch 8, 9 oder 10 mm, wobei der größere Einlaufradius maßlich beispielsweise dem 1,5- bis 5-Fachen, weiter beispielsweise dem 2- bis 3-Fachen des kleineren Einlaufradius entsprechen kann.

Der zweite, maßlich kleinere Einlaufradius kann, wie auch bevorzugt, dem zwickelartigen Übergangsabschnitt zwischen Federbein und Federring zugeordnet sein, in welchem die dem gekrümmten Verlauf des Federbeins folgende Mittellängsachse einen spitzen Winkel von beispielsweise 10 oder 15 bis hin zu 45 Grad zu der durch den Federring aufgespannten Ebene einschließt. Entsprechend kann der erste, maßlich größere Einlaufradius dem Übergangsabschnitt zugeordnet sein, in welchem die Mittellängsachse des Federbeines zu der Ebene des Federringes einen stumpfen Winkel einschießt (jeweils betrachtet in Umfangsrichtung von radial außen).

Auch kann der zweite Einlaufradius, bezogen auf den Querschnitt in der Einlaufebene, an einem Reduzierabschnitt des Querschnitts ausgebildet sein. Insbesondere im Übergangsabschnitt, weiter insbesondere in dem Einlaufbereich, kann das Federbein sich im Wesentlichen aus einem querschnittsgrößeren und einem den Reduzierabschnitt bildenden, bezüglich seiner Querschnittsfläche verringerten Bereich zusammensetzen. Der Reduzierabschnitt kann dabei, wie auch bevorzugt, dem vorbeschriebenen Zwickel zwischen Federbein und Federring zugewandt ausgebildet sein.

Der Reduzierabschnitt kann, in einer Ansicht von radial außen betrachtet, zunächst und im Wesentlichen dreieckförmig gebildet sein, bevorzugt mit in Umfangsrichtung gegenüberliegend gerundeten Konturen. Eine gerundete Kontur kann dabei im Wesentlichen den zweiten Einlaufradius unmittelbar bilden.

Die Dreieckform kann den Zwickelbereich zwischen Federbein und Federring zumindest teilweise füllen.

Auch kann der Reduzierabschnitt in fortsetzender Längserstreckung des Federbeins einen Ast etwa gleichbleibender Breitenerstreckung aufweisen, wobei die Breitenerstreckung gegenüber einer größten Breite in dem Dreieckbereich der Hälfte oder weniger entsprechen kann, bevorzugt einem Drittel oder weniger bis hin zu einem Fünftel oder Zwanzigstel oder weniger.

Der Ast geht bevorzugt stufenlos in den, den Zwickelbereich zwischen Federbein und Federring im Wesentlichen zumindest teilweise ausfüllenden Dreieckabschnitt über.

Insbesondere ausgehend von dem Dreieckbereich des Reduzierabschnittes kann sich gemäß einer bevorzugten Ausgestaltung der Ast nur über einen Teil der Längserstreckung des Federbeins erstrecken. So kann sich diesbezüglich eine Erstreckungslänge des Reduzierabschnittes insgesamt, entsprechend von Dreiecksabschnitt und Ast, ergeben, die dem 0,3- bis 0,8-Fachen, weiter etwa dem 0,4- bis 0,6-Fachen, gegebenenfalls etwa dem 0,5-Fachen des Längserstreckungsmaßes des Federbeines zwischen den Einlaufebenen in den unteren und den oberen Federring entsprechen kann.

Darüber hinaus kann gegenüberliegend, ausgehend von dem anderen Federring, ein zweiter Dreiecksbereich und/oder Ast ausgeformt sein. Der so gebildete Reduzierabschnitt zugewandt dem anderen Federring, beispielsweise dem oberen Federring, kann mit Bezug auf die Mittellängsachse des Federbeins und mit Bezug auf einen Querschnitt senkrecht zu dieser Mittellängsachse im Wesentlichen diametral gegenüberliegend zu dem Reduzierabschnitt des dem anderen Federring, beispielsweise dem unteren Federring, zugewandten Reduzierabschnittes vorgesehen sein. Es kann sich entsprechend ein wechselseitiges Erstrecken von Reduzierabschnitten entlang eines Federbeines ergeben.

Der Ast des einen Reduzierabschnittes kann dabei in einer Querschnittsfläche des Federbeines enden, aus welcher Querschnittsfläche heraus der Ast des anderen Reduzierabschnittes in Richtung auf den anderen Federring herauswachsen kann.

In einer möglichen Ausgestaltung können sich die Äste der beiden Reduzierabschnitte in der Längserstreckung entlang der Mittellängsachse teilweise überdecken, so beispielsweise über 2 bis 10 Prozent, weiter beispielsweise 5 Prozent der Gesamterstreckungslänge des Federbeins.

Die sich aus Dreieckbereichen und Ästen zusammensetzenden Reduzierabschnitte sind bevorzugt einstückig und materialeinheitlich mit dem Federbein und somit bevorzugt insgesamt mit der Feder ausgebildet.

Bezüglich der Ausgestaltung der Kunststofffeder mit zwei oder mehr Zwischenringen kann sich bezüglich der Federbeine eine Umfangserstreckung von jeweils 10 Grad oder mehr, bis hin zu 90 Grad, ergeben, weiter bevorzugt ein Umfangswinkelbereich von 10 bis 20 Grad, weiter beispielsweise etwa 15 Grad.

Bezüglich einer Umfangserstreckung eines Federbeines kann sich zwischen dem oberen Federring und dem unteren Federring eine Federbein-Längsachse ergeben. Diese Längsachse kann, wie bevorzugt, von dem Federbein, über die Höhe der Kunststofffeder betrachtet, mindestens zweimal gekreuzt sein. Es kann sich so über die Höhe der Kunststofffeder ein zick-zackartiger oder sinuswellenartiger Verlauf des Federbeins ergeben. Bei einem beispielhaften wellenartigen Verlauf des Federbeines kann jedem Fach zwischen zwei Ringen, d.h. zwischen einem Federring und einem Zwischenring oder zwischen zwei aufeinander folgenden Zwischenringen, eine Halbwelle des Federbeins ausgebildet sein, die unter Kreuzung insbesondere des Zwischenringes in eine gegenläufige Halbwelle im nächsten Fach übergeht.

Die bevorzugt materialeinheitliche und einstückige Anbindung der Ringe, sowohl der Federringe als auch der Zwischenringe, an die Federbeine kann, wie auch bevorzugt, erreicht sein jeweils im Zenit einer Welle des Federbeines.

Dabei können beide Enden des Federbeines auf derselben Umfangsseite zu der Federbein-Längsachse in den unteren und oberen Federring einlaufen. Alternativ können die Enden eines Federbeins auf unterschiedlichen Umfangsseiten zu der Längsachse in die Federringe einlaufen.

Darüber hinaus kann die Kunststofffeder in Umfangsrichtung durch die Federbeine mit den Federringen verbindende Wandbereiche geschlossen sein. Diese Wandbereiche können dabei die sich zwischen den Federbeinen und den Federringen und/oder der Zwischenringe in der Feder-Hüllwandung sich ergebenden Zwischenräume teilweise oder auch vollständig schließen, wobei weiter bevorzugt diese Wandbereiche die Eigenschaften der Kunststofffeder bezüglich Federkraft und Rückstellfähigkeit nicht oder nicht im Wesentlichen beeinflussen. Die Wandbereiche wirken hingegen in Art einer dünnwandigen Bespannung, wobei weiter auch diese Wandbereiche materialeinheitlich und einstückig mit den Federbeinen und den Federringen hergestellt sein können.

Ein Wandbereich kann dabei eine radiale Dicke aufweisen, die weniger als die Hälfte bis hin zu einem Fünfzigstel der radialen Dicke eines Federbeines entspricht. So kann die radiale Dicke weiter etwa einem Zwanzigstel bis einem Dreißigstel der radialen Dicke eines Federbeines entsprechen. Eine solch geringe radiale Dicke kann dem Wandbereich ein Ein- oder Ausstülpen nach radial innen oder radial außen im Zuge eines Einfedervorganges ermöglichen, so dass ein bezüglich der Wandbereiche balgartiger Effekt sich einstellen kann.

Insbesondere im Zusammenhang mit gekrümmt verlaufenden Zwischenringen kann weiter vorgesehen sein, dass die Zwischenringe, betrachtet von einer senkrecht zu der Längsachse verlaufenden Mittelebene zwischen zwei Zwischenringen, jeweils konkav oder jeweils konvex gekrümmt verlaufen. In der vorbeschriebenen Mittelebene bildet sich die Längsachse als Punkt ab. Von dieser Mittelebene aus in beiden Richtungen entlang der Längsachse betrachtet, ergeben sich konkave beziehungsweise konvexe Krümmungen beider in Richtung der Längsachse aufeinander folgender Zwischenringe beziehungsweise Umfangsabschnitte der Zwischenringe.

Hierbei können die Zwischenringe jeweils im Bereich ihrer Krümmungs-Wendepunkte (Zenit) bei jeweils konvexem Verlauf der Krümmung einen in Achsrichtung betrachtet maximalen Abstand zueinander aufweisen und im Bereich ihrer Krümmungs-Wendepunkte bei jeweils konkavem Verlauf der Krümmung einen in Achsrichtung betrachtet minimalen Abstand.

Darüber hinaus kann gemäß einer möglichen Ausgestaltung eine in Richtung der Längsachse gegebene Breite eines Zwischenringes um 10 Prozent oder mehr, beispielsweise bis hin zu 25 oder 50 Prozent oder mehr größer sein als eine in derselben Richtung gegebene Breite des unteren und/oder oberen Federringes. So kann weiter die vorbeschriebene Breite eines Zwischenringes beispielsweise einem 1,1- bis etwa 2-Fachen der Breite eines Federringes entsprechen.

Bezüglich des verwendeten Kunststoffes kann ein Polyolefin bevorzugt sein, so insbesondere PBT (Polybutylenterephtalat), PET (Polyethylenterephtalat) oder auch COC (Cycloolefin-Copolymere). Darüber hinaus kann auch Polypropylen mit Füllstoffen zur Anwendung kommen. Das E-Modul liegt bevorzugt zwischen 1900 und 3000 MPA.

Die Kunststofffeder weist eine optimale Federcharakteristik auf, bei welcher nach einem ersten Anstieg der Federkraft im Zuge eines Niederdrückens eine dann bezüglich des weiteren Niederdrückens konstante Kraft gegeben sein kann.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos. Beispielsweise beinhaltet die Angabe 1,5- bis 5-fach auch die Offenbarung von 1,6- bis 5-fach, 1,5- bis 4,9-fach, 1,6- bis 4,9-fach, etc., die Offenbarung von 0,1 bis 10 Grad, auch die Offenbarung von 0,2 bis 10 Grad, 0,1 bis 9,9 Grad, 0,2 bis 9,9 Grad, etc., die Offenbarung von 10 bis 15 mm, auch die Offenbarung von 10,1 bis 15mm, 10 bis 14,9 mm, 10,1 bis 14,9 mm, etc.. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung und andere, nicht als Erfindung beanspruchte Ausführungsbeispiele anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: einen Längsschnitt durch einer Spender mit einer Kunststofffeder, eine Grundstellung betreffend;
- Fig. 2: eine Schnittdarstellung gemäß Figur 1, jedoch betreffend eine Ausgabestellung;
- Fig. 2a: eine Ausschnittdarstellung gemäß Bereich IIa in Figur 2, um 90 Grad um eine Feder-Längsachse gedreht;
- Fig. 3: in perspektivischer Einzeldarstellung eine Kunststofffeder in einer ersten Ausführungsform, wie diese auch in dem Spender gemäß den Figuren 1 und 2 eingesetzt ist;
- Fig. 4: die Kunststofffeder gemäß Figur 3 in einer weiteren perspektivischen Darstellung;
- Fig. 5: die Kunststofffeder der ersten Ausführungsform in Draufsicht;
- Fig. 6: die Seitenansicht gegen die Kunststofffeder gemäß Pfeil VI in Figur 5;
- Fig. 7: die Seitenansicht gemäß Pfeil VII in Figur 5;
- Fig. 8: den Schnitt gemäß der Linie VIII-VIII in Figur 6;
- Fig. 9: den Schnitt gemäß der Linie IX-IX in Figur 6;
- Fig. 10: den Schnitt gemäß der Linie X-X in Figur 7;
- Fig. 11: in strichpunktierter Linienart wiedergegeben eine Abwicklung eines Federbeines mit Abschnitten von Federringen, in die das Federbein einläuft, und in Vollliniendarstellung Reduzierabschnitte des Federbeins;
- Fig. 12: in perspektivischer Darstellung eine Kunststofffeder in einer zweiten Ausführungsform;
- Fig. 13: die Draufsicht hierzu;
- Fig. 14: die Seitenansicht gemäß Pfeil XIV in Figur 13;
- Fig. 15: in einer vergrößerten Einzeldarstellung ein Federbein in Seitenansicht mit Abschnitten mit dem Federbein verbundener Federringe und Zwischenringe;
- Fig. 16: eine Ausschnittdarstellung einer Seitenansicht gegen eine Kunststofffeder in einer dritten Ausführungsform;
- Fig. 17: den Schnitt gemäß der Linie XVII-XVII in Figur 16;
- Fig. 18: die Herausvergrößerung des Bereiches XVIII in Figur 17;
- Fig. 19: eine Schnittdarstellung gemäß Figur 17, jedoch die Komprimierstellung der Kunststofffeder betreffend;
- Fig. 20: in perspektivischer Darstellung eine Kunststofffeder in einer weiteren Ausführungsform;
- Fig. 21: die Draufsicht auf die Kunststofffeder gemäß Figur 20;
- Fig. 22: die Ansicht gegen die Kunststofffeder gemäß dem Pfeil XXII in Figur 21;
- Fig. 23: die Ansicht gegen die Kunststofffeder gemäß dem Pfeil XXIII in Figur 21;
- Fig. 24: die Herausvergrößerung des Bereiches XXIV in Figur 23.

### Beschreibung der Ausführungsformen

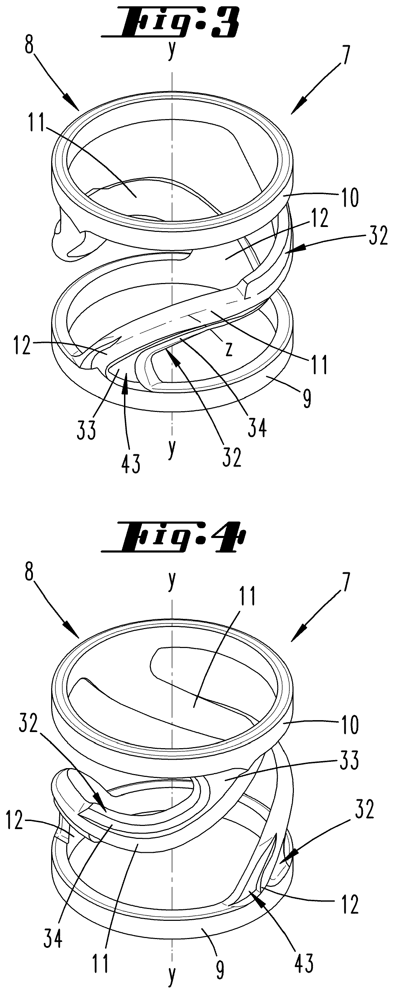

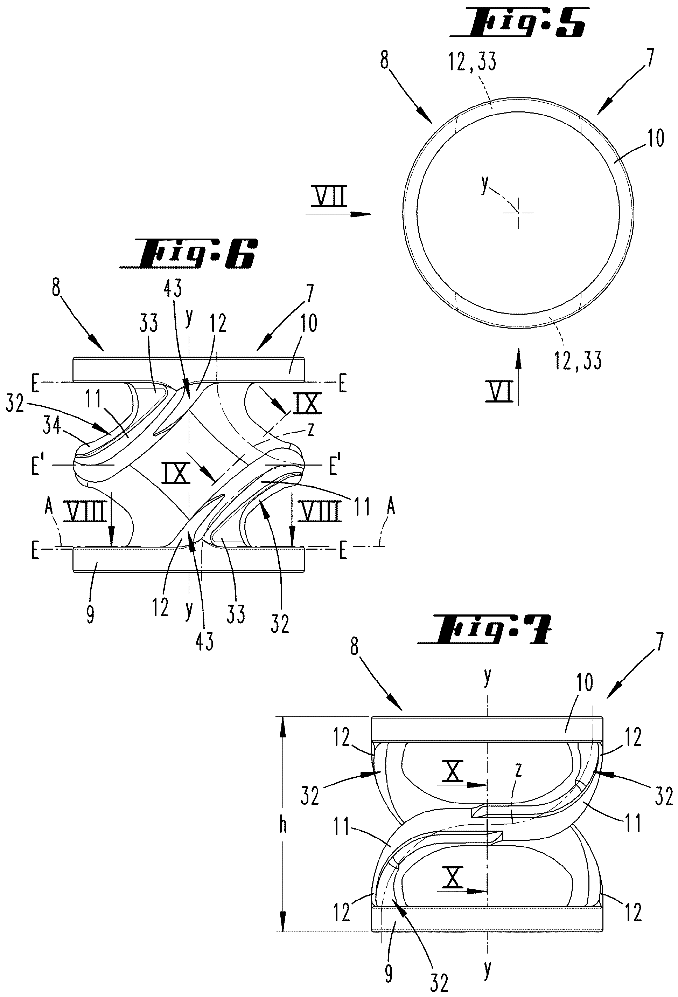

Dargestellt und beschrieben ist, zunächst mit Bezug zu den Figuren 3 bis 7, eine Kunststofffeder 8 mit einem unteren Federring 9 und einem oberen Federring 10, die über Federbeine 11 einfederbar miteinander verbunden sind, wobei die Federbeine 11 in einen Übergangsabschnitt in den jeweiligen Federring 9, 10 einlaufen.

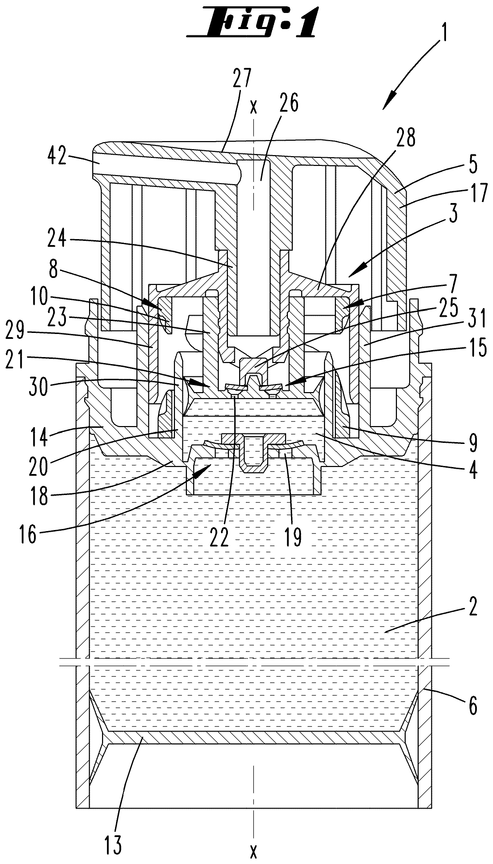

Der beispielsweise in Figur 1 dargestellte Spender 1 kann einen hohlzylinderförmigen Vorratsbehälter 6 aufweisen. Auf diesem ist die Spenderpumpe 3 festgelegt, beispielsweise verschraubt oder verrastet. In der Nichtbenutzungsstellung gemäß Figur 1 kann die Spenderpumpe 3 von einer nicht dargestellten Kappe überdeckt sein.

Die Formteile des Spenders 1 bestehen bevorzugt aus einem Kunststoff-Werkstoff, wie beispielsweise Polyethylen, und sind bevorzugt im SpritzgussVerfahren hergestellt. Wesentliche Ausnahmen sind jedenfalls bei dem dargestellten Ausführungsbeispiel die Ventile, die aus einem gummiartigen Werkstoff bestehen können, der zwar ein TPE sein kann (und insofern auch im Spritzgussverfahren Verwendung finden kann) bevorzugt aber beim Ausführungsbeispiel vulkanisiert ist.

In dem Vorratsbehälter 6 kann ein Nachlaufkolben 13 positioniert sein, über welchen die auszugebende Masse 2 in Richtung auf die Spenderpumpe 3 transportiert wird.

Die Spenderpumpe 3 setzt sich im Wesentlichen zusammen aus einem topfförmigen Unterteil 14, welches eine Trennwand zu dem Vorratsbehälter 6 bildet, einer Pumpkammer 4 mit einem Einlassventil 15 und einem Auslassventil 16 und einem sich auf einer Rückstellvorrichtung 7 in Form einer Kunststofffeder 8 abstützenden Kopfstück 5.

Unterteil 14, Pumpkammer 4, die Rückstellvorrichtung 7 in Form einer Kunststofffeder 8 und eine Außenwandung 17 des Kopfstückes 5 können rotationssymmetrisch auf einer gemeinsamen Achse x angeordnet sein, welche Achse x zugleich auch die Körperachse des Vorratsbehälters 6 bilden kann.

Der Topfboden 18 des Unterteils 14 weist eine zentrale Öffnung 19 auf, von welcher beispielsweise sternförmig schlitzartige Eintrittsöffnungen ausgehen. Letztere sind überdeckt von einem, das Einlassventil 15 ausformenden, flexiblen Verschlussteller.

Radial außerhalb des Einlassventils 15 wächst aus dem Topfboden 18 eine Zylinderwandung 20 aus, zur Ausformung der Pumpkammer 4. In dieser Pumpkammer 4 ist ein Pumpkolben 21 in Axialrichtung beweglich gehalten.

Bevorzugt gleichmäßig um die Achse x verteilt ist der Pumpkolben 21 mit Durchlassöffnungen 22 versehen, welche zusammen mit einem weiteren, diese Durchlassöffnungen auf der dem Einlassventil 15 abgewandten Seite überdeckenden, flexiblen Verschlussteller das Auslassventil 16 bilden. Dieses Auslassventil 16 ist umschlossen von einem hohlzylinderförmigen, einen Hals bildenden Pumpkolbenteil 23, welches die Anbindung an das Kopfstück 5 bildet.

Das Kopfstück 5 greift mit einem zentralen zylinderförmigen Hohlkörper 24 in das Pumpkolbenteil 23 ein. In diesem Übergreifbereich sind das Kopfstück 5 und der Pumpkolben 21 miteinander fest verbunden.

In dem, dem Auslassventil 16 zugewandten Endbereich geht der Hohlkörper 24 über in einen auf den flexiblen Verschlussteller des Auslassventils 16 gerichteten, zentralen Niederhalter 25, welcher den zugeordneten Verschlussteller beaufschlagt.

Der Hohlkörper 24 formt einen Ausgabekanal 26 aus. Dieser verläuft zunächst ausgehend von dem, dem Auslassventil 16 zugewandten Endbereich des Hohlkörpers 24 in Axialerstreckung und geht abschließend über in einen seitlich auslaufenden Bereich mit einer endseitigen Spendemündung 42. Dieser Bereich ist unmittelbar unterhalb einer gegenüber einer senkrechten Ebene zur Achse x geneigt verlaufenden Betätigungsfläche des Kopfstückes 5 angeordnet.

Das Kopfstück 5 und der damit verbundene Pumpkolben 21 sind in Richtung auf die obere Anschlagstellung federbelastet. Diese Belastung bringt die Rückstellvorrichtung 7 in Form einer Kunststofffeder 8.

Die Kunststofffeder 8 stützt sich fußseitig im Bereich des Topfbodens 18 des Unterteils 14 ab. Kopfseitig belastet die Kunststofffeder 8 das Kopfstück 5 zufolge unterseitiger Beaufschlagung eines an dem Hohlkörper 24 angeformten, radial nach außen abragenden Kragens 28.

Dieser Kragen 28 trägt entlang seines umlaufenden Randes eine von dem Kragen 28 in Richtung auf das Unterteil 14 gerichtete radial äußere Stützausformung 29.

Die Stützausformung 29 und der Kragen 28 sind insgesamt etwa topfartig gestaltet, mit einer Topföffnung, die nach unten in Richtung auf das Unterteil 14 weist.

Die Stützausformung 29 ist gegenüber der Zylinderwandung 20, die zudem eine radial innere Stützausformung 30 bildet, durchmesservergrößert, wobei ein radiales Abstandsmaß zwischen einer Wandungsinnenseite der radial äußeren Stützausformung 29 und einer gegenüberliegenden Außenwandung der radial inneren Stützausformung 30 bevorzugt angepasst sein kann an ein größtes, radiales Dickenmaß d der Kunststofffeder 8 im Bereich eines oberen Federringes 10 und/oder eines unteren Federringes 9 und/oder eines Federbeins 11.

Es ergibt sich so ein koaxial zur Achse x sich umlaufend erstreckender Ringraum, in welchem die Kunststofffeder 8 bevorzugt aufgenommen ist.

Die radial äußere Stützausformung 29 kann, wie auch dargestellt, radial außen umlaufend durch eine vom Topfboden 18 in Axialrichtung auf das Kopfstück 5 herauswachsende Führungswandung 31 umfasst sein.

Die Funktionsweise des Spenders 1 ist insofern bekannt, dass durch Pumpbewegung des Kopfstückes 5 und damit einhergehendem Wechsel von Unter- und Überdruck eine portionierte Menge an pastöser Masse 2 ausgegeben wird. Durch Druckbeaufschlagung auf das Kopfstück 5 und damit einhergehender Abwärtsverlagerung desselben wird in der Pumpkammer 4 ein Überdruck erzeugt, zufolge dessen die in dieser Pumpkammer 4 bevorratete Portion durch das geöffnete Auslassventil 16 und den Ausgabekanal 26 austreten kann. Das Einlassventil 15 ist zufolge Überdrucks geschlossen.

Die Abwärtsverlagerung des Kopfstückes 5 mit dem Pumpkolben 21 erfolgt entgegen der Federrückstellkraft der Kunststofffeder 8.

Nach Aufheben der das Kopfstück 5 beaufschlagenden Kraft stellt sich dieses aufgrund der Federbeaufschlagung selbsttätig in die Ausgangslage zurück.

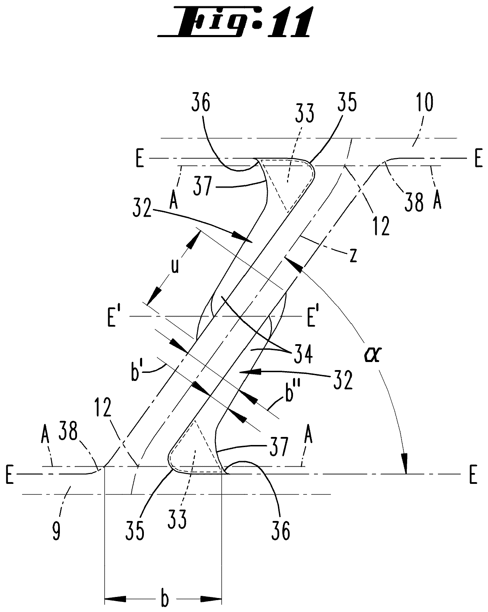

Die Kunststofffeder 8 der ersten dargestellten Ausführungsform gemäß den Zeichnungen in den Figuren 3 bis 11 weist zunächst und im Wesentlichen einen unteren Federring 9 und einen oberen Federring 10 auf, die koaxial zu einer Längsachse y ausgerichtet sind. Im Einbauzustand fällt die Längsachse y mit der Achse x des Spenders 1 zusammen.

Die Federringe 9 und 10 sind so ausgerichtet, dass eine jeweils durch einen Federring 9 beziehungsweise 10 aufgespannte Ebene E sich im Wesentlichen senkrecht zu der Längsachse y erstreckt.

Die Federringe 9, 10 sind in Axialrichtung zueinander beabstandet und über Federbeine 11 einfederbar miteinander verbunden.

In dem dargestellten Ausführungsbeispiel weist die Kunststofffeder 8 zwei solcher Federbeine 11 auf. Jedes Federbein 11 erstreckt sich hierbei, in Umfangsrichtung der Kunststofffeder 8 betrachtet, über mehr als 90 Grad, bevorzugt bis hin zu etwa 180 Grad im Zuge ihrer Erstreckung ausgehend von dem unteren Federring 9 hin zum oberen Federring 10.

Dabei kann jedes Federbein 11 eine dem gekrümmten Verlauf beispielsweise vom Übergangsabschnitt 12 in den unteren Federring 9 bis zu dem Übergangsabschnitt 12 in den oberen Federring 10 folgende geometrische Mittellängsachse z aufweisen.

Mit Bezug auf diese Mittellängsachse z kann jedes Federbein 11 zu dem jeweiligen Federring 9 oder 10 beziehungsweise zu der durch die Federringe aufgespannten Ebene E in einer Seitenansicht, in welcher sich die Ebenen E wie auch die Mittellängsachse z als Linien darstellen, einen spitzen Winkel α von etwa 15 bis 45 Grad, weiter etwa 30 bis 45 Grad einschließen.

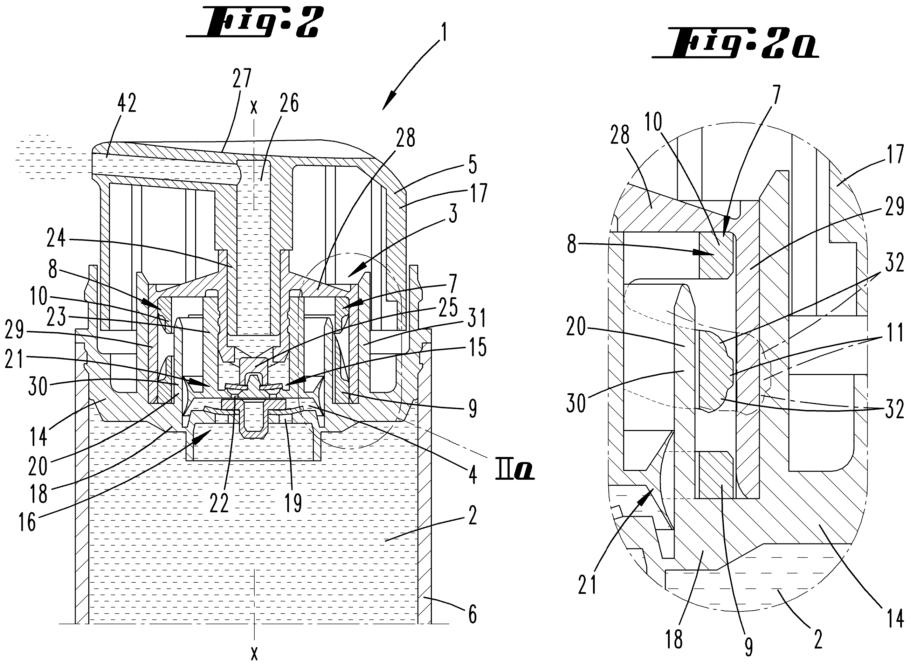

Insbesondere das Federbein 11 der Kunststofffeder 8 ist in dem Ringraum zwischen der Zylinderwandung 20 und der Führungswandung 31 in Radialrichtung gestützt, insbesondere in Radialrichtung nach außen durch die Führungswandung 31. Entsprechend kann, wie auch bevorzugt, das Federbein 11 beziehungsweise können beide Federbeine 11 an einer Radialauslenkung im Zuge der Federkomprimierung, wie diese beispielhaft in der Figur 2 dargestellt ist, gehindert sein, weiter insbesondere an einer Radialauslenkung nach außen. Eine solche theoretische Radialauslenkung nach außen ist in der Darstellung in Figur 2a in strichpunktierter Linienart angedeutet.

Bei insbesondere radial beidseitig geführten Federbeinen 11 und damit einhergehender Hinderung einer Radialauslenkung der Federbeine 11 kann sich eine Drehung des einen oder beider Federringe 9, 10 in ihren Sitzen ergeben.

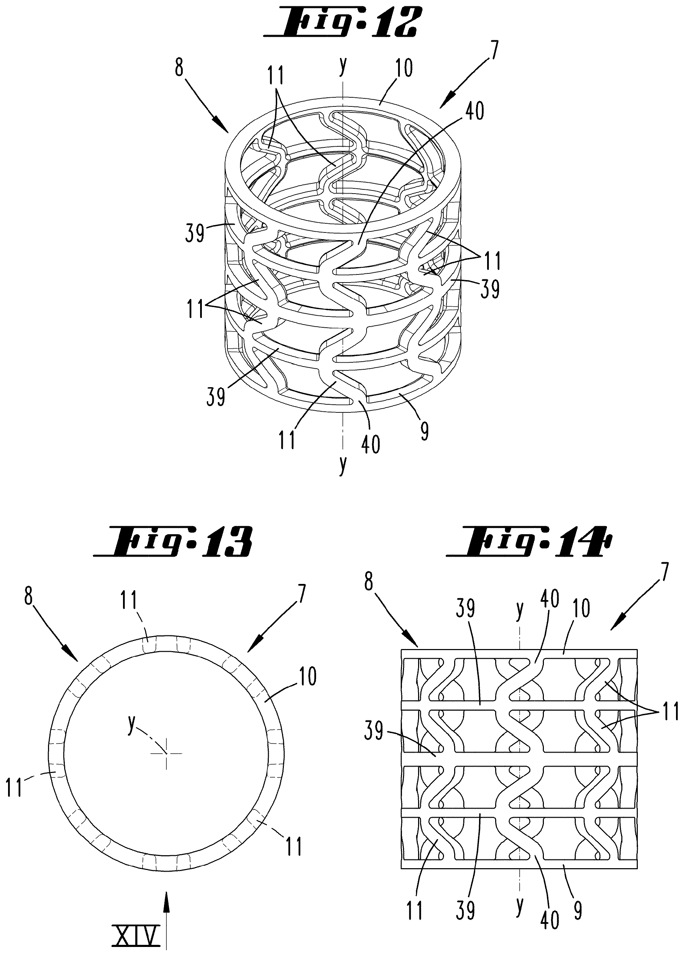

Jedes Federbein 11 der in den Figuren 1 bis 11 dargestellten ersten Ausführungsform, darüber hinaus gegebenenfalls aber auch bezüglich der in den Figuren 12 bis 18 weiteren Ausführungsformen, kann mit Bezug auf einen Querschnitt senkrecht zu der Mittellängsachse z zumindest einen Reduzierabschnitt 32 aufweisen. Dieser Reduzierabschnitt 32 kann eine, bezogen auf die Längsachse y betrachtete radiale Dicke d' aufweisen, die dem 0,3- bis 0,95-Fachen, weiter etwa dem 0,6- bis 0,9-Fachen der Dicke d des nicht reduzierten Abschnitts des Federbeins 11 entsprechen kann.

Der Reduzierabschnitt 32 kann darüber hinaus bevorzugt dem, den spitzen Winkel α aufweisenden Zwickelbereich des jeweiligen Federbeins 11 zugeordnet ausgebildet sein, wobei bevorzugt an einem Federbein 11 zwei solche Reduzierabschnitte 32 vorgesehen sein können, die sich in Erstreckungsrichtung der Längsachse y betrachtet etwa mittig der Längserstreckung des Federbeines 11 überdecken.

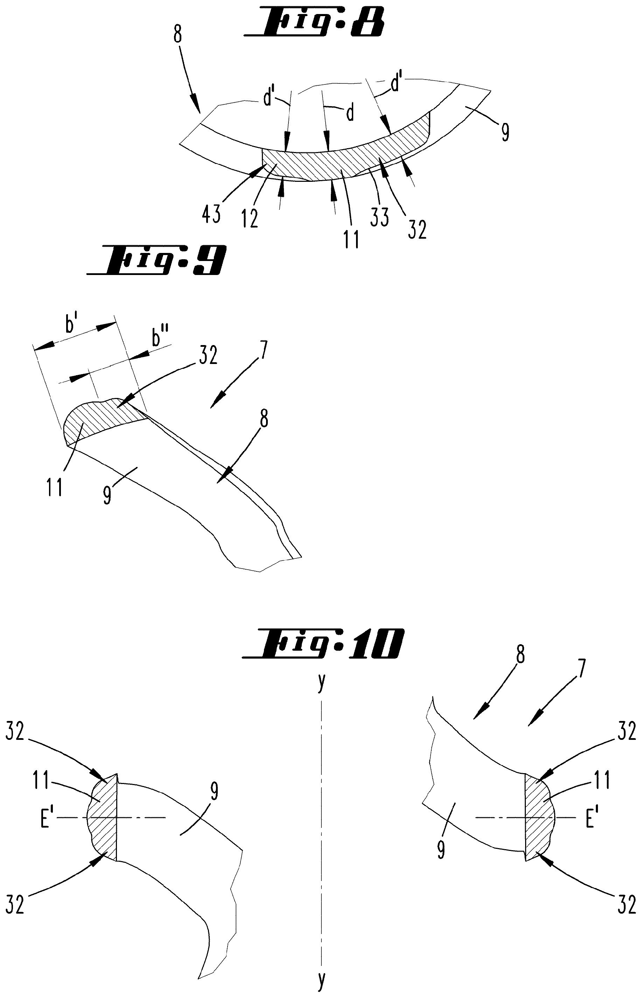

Mit Bezug auf einen Querschnitt durch ein Federbein 11 im mittigen Bereich der Längserstreckung des Federbeines 11 gemäß der Darstellung in Figur 10 kann sich bevorzugt eine vertikale Gegenüberlage der Reduzierabschnitte 32 ergeben.

Jeder Reduzierabschnitt 32 kann sich, wie auch dargestellt, mit Bezug auf eine Ansicht von radial außen, aus einem den Zwickelbereich zwischen Federbein 11 und dem jeweiligen Federring 9 beziehungsweise 10 füllenden Dreieckabschnitt 33 und einem sich hieran anschließenden, im Wesentlichen in Längserstreckung des Federbeins 11 sich erstreckenden Ast 34 zusammensetzen.

Jeder Dreieckbereich 33 kann dabei in Umfangsrichtung betrachtet gegenüberliegend gerundete Konturen ausbilden, so zum einen eine gerundete Kontur 35 unmittelbar im zwickelartigen Übergang vom nicht reduzierten Abschnitt des Federbeines 11 in den jeweiligen Federring 9 oder 10 und eine in Umfangsrichtung betrachtete freie gerundete Kontur 36, die einen zweiten Einlaufradius 37 für das Federbein 11 insgesamt bildet, wobei das diesbezügliche Radiusmaß größer, beispielsweise dem 1,5- bis 3-Fachen, weiter etwa dem 2-Fachen des Radiusmaßes im Bereich der ersten gerundeten Kontur 35 entsprechen kann.

Jedes Federbein 11 weist darüber hinaus auch einen ersten, dem stumpfen Winkel zwischen Federbein 11 und dem jeweiligen Federring 9, 10 zugeordneten Einlaufradius 38 auf. Dieser ist gegenüber dem zweiten Einlaufradius 37 maßlich größer gewählt, entspricht so beispielsweise etwa dem 1,5- bis 5-Fachen, weiter etwa dem 2- bis 3-Fachen des zweiten Einlaufradius 37.

Der sich in Längserstreckung des Federbeines 11 an den Dreiecksbereich 33 anschließende Ast 34 kann - bezogen auf einen Querschnitt senkrecht zu der Mittellängsachse z (vergleiche beispielsweise Figur 9) - eine zumindest annähernd über die Längserstreckung der Ast 34 gleichbleibende Breite b' aufweisen, die etwa dem 0,1- bis 0,5-Fachen, weiter etwa dem 0,15- bis 0,25-Fachen der in selber Richtung betrachteten Gesamtbreite b" des Federbeines 11 inklusive des Reduzierabschnittes 32 in diesem Bereich entsprechen kann.

Die Äste 34 der Reduzierabschnitte 32 können sich, wie dargestellt, bis über eine mittig zwischen den Ebenen E die Längsachse y querende Mittelebene E' hinaus erstrecken. Das sich hierbei gegebenenfalls einstellende Überdeckungsmaß u kann etwa dem Breitenmaß b', gegebenenfalls etwa dem 3- bis 10-Fachen dieses Breitenmaßes b' eines Astes 34 entsprechen.

Der eine günstige Kraftentwicklung im Zuge der Komprimierung und/oder der Rückstellung der Kunststofffeder 8 erbringende vergrößerte Übergangsabschnitt 12 zwischen einem Federbein 11 und einem Federring 9, 10 zeigt in einer senkrecht zur Mittellängsachse z betrachteten, bevorzugt parallel zur Ebene E verlaufenden Einlaufebene A eine um 30 Prozent oder mehr größere Breite b auf als in einem Querschnittsbereich des Federbeines 11 etwa mittig der Längserstreckung des Federbeines 11, beispielsweise gemäß der Darstellung in der Figur 9. Diese größte Breite b im Bereich dieser Einlaufebene A kann, entsprechend bei Schneiden der gerundeten Konturen 35 und 36 und somit Schneiden sowohl des reduzierten als auch des nicht reduzierten Bereiches durch die Einlaufebene A, ein Maß aufweisen, das dem 1,3- bis 5-Fachen, weiter beispielsweise etwa dem 1,5 bis 2,5-Fachen der Breite b" des diesbezüglichen Federbeins 11 in einem Mittenbereich, bevorzugt außerhalb des Überdeckungsbereiches der Reduzierabschnitte 32, entsprechen kann.

Wie weiter aus den Darstellungen ersichtlich, kann darüber hinaus auch in dem den ersten Einlaufradius 38 aufweisenden, stumpfwinkeligen Übergang vom Federring 9, 10 in das Federbein 11 ein zweiter Reduzierabschnitt 43 ausgebildet sein. Dieser kann bezüglich des Dickenverhältnisses zu dem nicht reduzierten Bereich des Federbeins 11 gleich oder annähernd gleich innerhalb der angegebenen Wertebereiche des vorbeschriebenen Reduzierabschnittes 32 ausgebildet sein.

Der Reduzierabschnitt 43 kann sich dabei ausgehend von dem Übergangsabschnitt 12 etwa über die Strecke entlang des Federbeines 11 erstrecken, die etwa dem 0,1- bis 0,7-Fachen, weiter etwa dem 0,2- bis 0,3-Fachen der Erstreckungslänge des ersten Reduzierabschnitts 32 entsprechen kann.

**Die** Figuren 12 bis 15 zeigen eine weitere Ausführungsform der Rückstellvorrichtung 7. Auch hier ist diese bevorzugt eine Kunststofffeder 8 mit einem oberen Federring 10 und einem unteren Federring 9, die bevorzugt ebenengleich entlang einer Längsachse y zueinander versetzt verlaufen.

Über die Höhe h der Kunststofffeder 8, entsprechend über die Länge der Längsachse y, sind in dem dargestellten Ausführungsbeispiel im Wesentlichen senkrecht zu der Längsachse y verlaufende Zwischenringe 39 vorgesehen. Gemäß dem dargestellten Ausführungsbeispiel können drei solcher Zwischenringe 39 vorgesehen sein. Alternativ sind diesbezüglich aber auch nur zwei oder mehr als drei, bis hin zu fünf oder sechs solcher Zwischenringe 39 möglich.

Bezüglich der Außen- und/oder Innendurchmesser können die Federringe 9, 10 und die Zwischenringe 39 gleich gestaltet sein.

Die Federringe 9 und 10 sowie die Zwischenringe 39 sind in Längserstreckungsrichtung der Längsachse y bevorzugt gleichmäßig zueinander beabstandet und über Federbeine 11 miteinander verbunden.

So können über den Umfang gleichmäßig verteilt, wie auch dargestellt, acht solcher Federbeine 11 vorgesehen sein.

Jedes Federbein 11 ist mit jedem Federring 9, 10 und jedem Zwischenring 39 verbunden, insbesondere materialeinheitlich und einstückig.

Jedes Federbein 11 kann sich dabei, in Umfangsrichtung betrachtet, über einen Umfangswinkelbereich von etwa 15 bis 20 Grad oder mehr bis hin zu beispielsweise 45 oder 60 Grad erstrecken.

Dabei kann weiter jedes Federbein 11, mit Bezug auf eine Ansicht von radial außen, zick-zack- oder wellenförmig verlaufen, weiter gegebenenfalls mit jeweils einer Halbwelle zugeordnet einem freien Bereich zwischen zwei Ringen, so beispielsweise zwischen einem Federring 9 oder 10 und einem Zwischenring 39 oder auch zwischen zwei Zwischenringen 39.

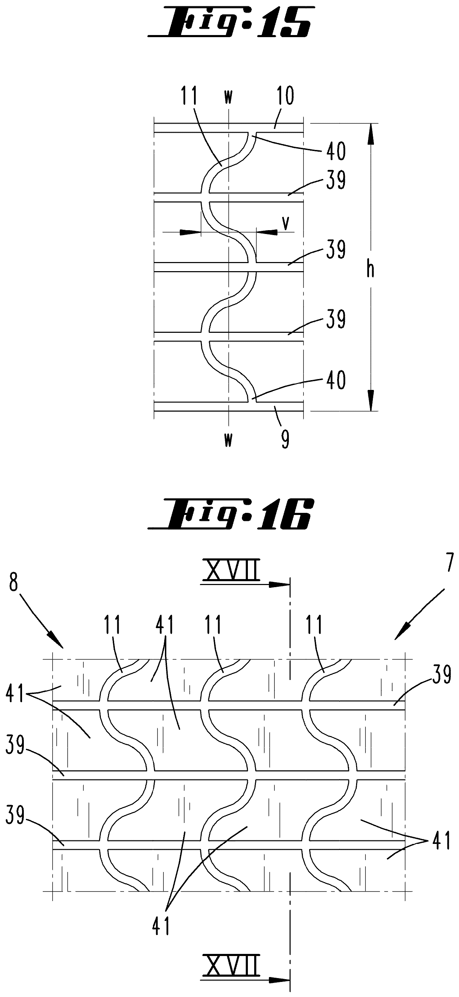

So kann sich bezüglich einer Umfangserstreckung eines Federbeines 11 zwischen dem oberen Federring 10 und dem unteren Federring 9 eine Federbein-Längsachse w sich ergeben, die von dem Federbein 11 über die Höhe h der Kunststofffeder 8 mehrfach, so gemäß dem dargestellten Ausführungsbeispiel viermal, gekreuzt sein kann. Ein solches Kreuzen ist bevorzugt erreicht auf einem halben Erstreckungsweg eines Federbeinabschnittes zwischen zwei Ringen (vergleiche insbesondere Figur 15).

Jeweils im Bereich eines Wellenberges und/oder eines Wellentales kann eine Anbindung an einem Zwischenring 39 gegeben sein.

Die beiden Enden 40 eines so gestalteten Federbeins 11 können, wie auch dargestellt, auf derselben Umfangsseite zu der Federbein-Längsachse w in den unteren und/oder oberen Federring 9, 10 einlaufen.

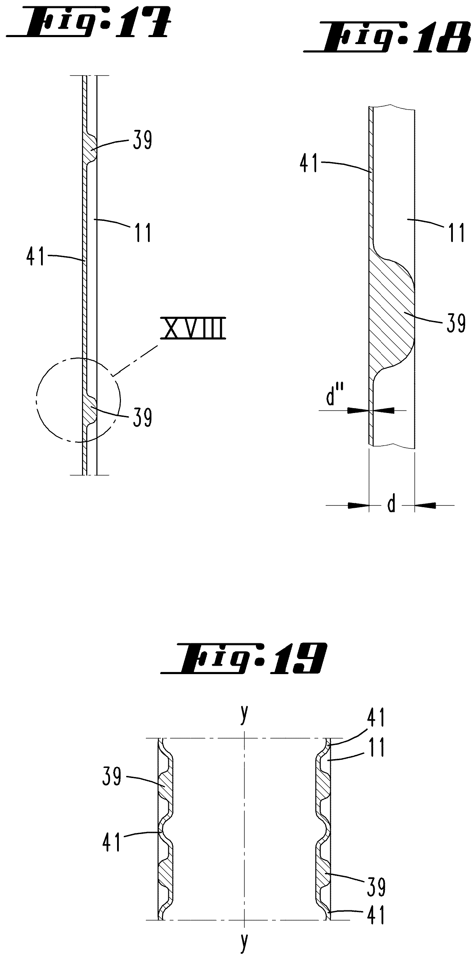

Wie aus den Darstellungen in den Figuren 17 bis 19 zu erkennen, können die sich zwischen den Federringen 9, 10 und den Federbeinen 11, darüber hinaus auch unter Einbeziehung der Zwischenringe 39 ergebenden Freiräume durch die Federbeine 11 und die Ringe verbindende Wandbereiche 41 verschlossen sein. Diese Wandbereiche 41 können, wie auch bevorzugt, materialeinheitlich und einstückig mit den Federbeinen 11 und den Ringen ausgebildet sein, wobei weiter die Wandbereiche 41 hautartig vorgesehen sein können. Entsprechend können die Wandbereiche 41 eine radiale Dicke d" aufweisen, die beispielsweise einem Fünftel bis einem Zwanzigstel oder weniger, weiter beispielsweise einem Zehntel der radialen Dicke d eines Federbeines 11 und oder eines Federringes 9, 10 und/oder eines Zwischenringes 39 entsprechen kann (vergleiche insbesondere Figur 18).

Ein derartig vergleichsweise dünner, bis hin zu hautartiger Wandbereich 41 kann bei einer Komprimierung der Kunststofffeder 8, wie diese anhand einer Ausschnittvergrößerung in Figur 19 skizziert ist, balgartig beispielsweise nach radial außen zwischen den Zwischenringen 39, den Federringen 9, 10 und den Federbeinen 11 ausstülpen.

Bei einem Spender 1 gemäß dem eingangs beschriebenen Ausführungsbeispiel kann unter Einsatz einer vorbeschriebenen Kunststofffeder 8 mit die Freiräume ausfüllenden Wandbereichen 41 die Anordnung der Ventile 15 und 16 entfallen. Die so gebildete Kunststofffeder 8 wirkt hierbei nicht nur allein als Rückstellvorrichtung 7, sondern darüber hinaus auch in Art eines in der Rückstellbewegung einen Unterdruck zum Nachsaugen von Masse 2 aufbauenden Balgs.

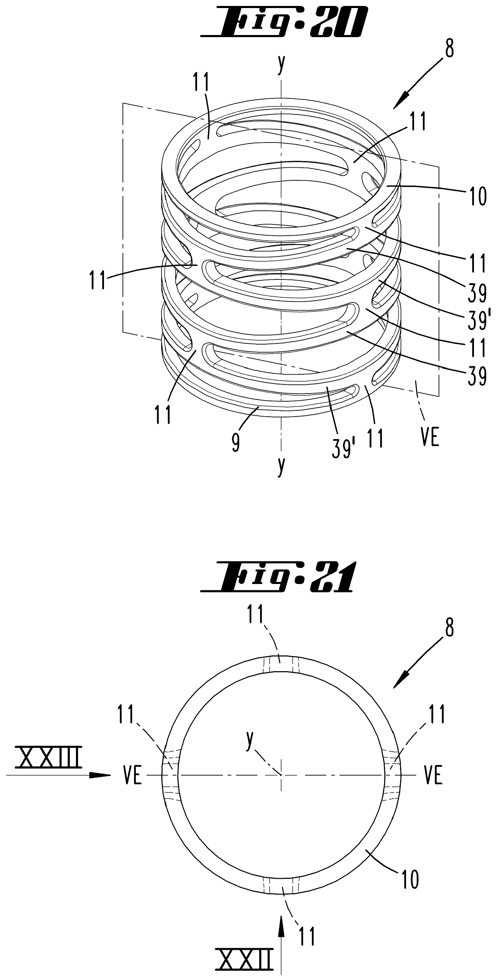

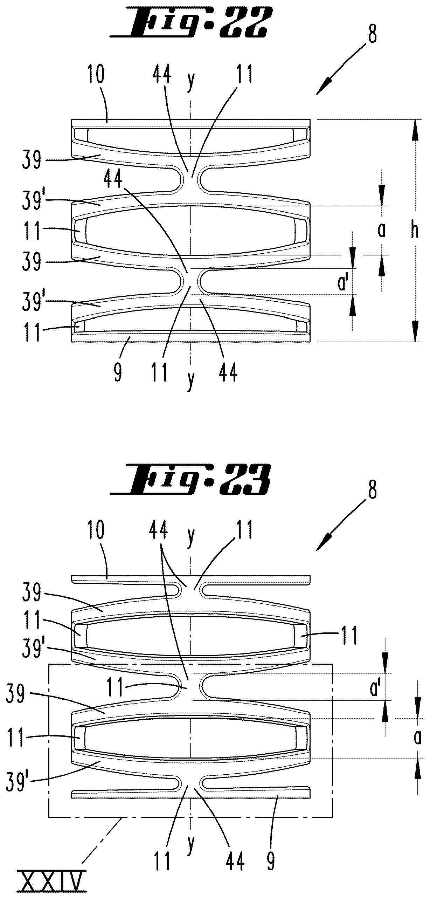

Die Figuren 20 bis 24 zeigen eine weitere Ausführungsform einer Kunststofffeder 8 mit einem unteren Federring 9 und einem oberen Federring 10, welche Federringe 9 und 10 auch in diesem Ausführungsbeispiel sich im Wesentlichen in einer quer zur Längsachse y verlaufenden Ebene E erstrecken.

Über die Höhe h entlang der Längsachse y sind zwischen den Federringen 9 und 10 Zwischenringe 39 und 39' vorgesehen. Auch diese erstrecken sich im Wesentlichen etwa ausgerichtet entlang einer quer zu der Längsachse y verlaufenden Ebene. In dem dargestellten Ausführungsbeispiel sind vier Zwischenringe 39 und 39' vorgesehen.

Die Federringe 9 und 10 sind mit den in Richtung r beziehungsweise r' der Längsachse y folgenden Zwischenringen 39 beziehungsweise 39' über Federbeine 11 verbunden. Auch die in Richtung r beziehungsweise r' der Längsachse y aufeinander folgenden Zwischenringe 39 und 39' sind über solche Federbeine 11 miteinander verbunden. In dem dargestellten Ausführungsbeispiel sind in jeder Verbindungsebene zwischen zwei Zwischenringen oder zwischen einem Federring und einem Zwischenring zwei mit Bezug zu der Längsachse y diametral gegenüberliegende Federbeine 11 vorgesehen.

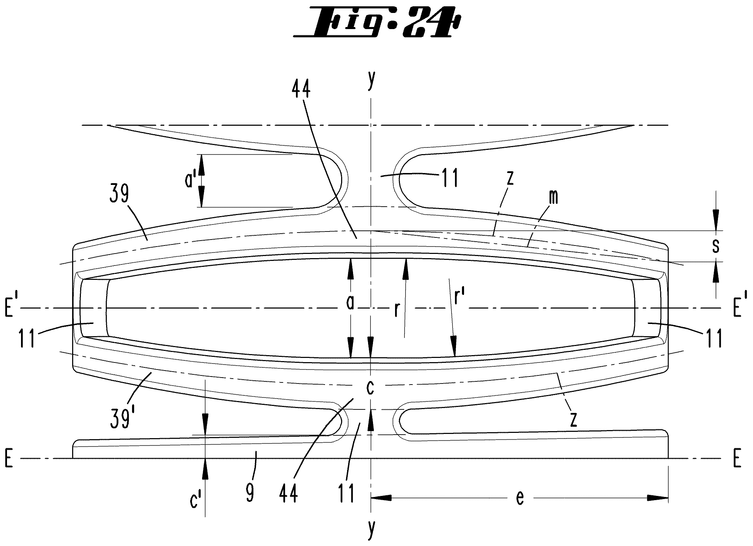

Wie insbesondere aus der Vergrößerungsdarstellung in Figur 24 zu erkennen, kann eine in Richtung r beziehungsweise r' der Längsachse y betrachtete Breite c eines Zwischenringes 39 beziehungsweise 39' etwa dem 1,5- bis 2,5-Fachen, weiter etwa dem 2-Fachen der in selber Richtung betrachteten Breite c' eines Federringes 9 beziehungsweise 10 entsprechen. Diese Breiten c beziehungsweise c' können dabei, wie auch bevorzugt, bei einer Projektion der Zwischenringe 39 und 39' sowie der Federringe 9 und 10 in eine Vertikalebene VE, in welcher sich die Längsachse y als Linie darstellt (vergleiche Figur 20), entlang der Längsachse y erfasst werden, wobei sich dieses Breitenmaß einerends auf eine sich ergebende Randkante des Zwischenringes beziehungsweise des Federringes beziehen kann und anderenends auf eine in dieser Projektion gedachte Verlängerung einer gegebenenfalls in ein Federbein 11 einlaufenden gegenüberliegenden Randkante des Zwischenringes beziehungsweise des Federringes.

Weiter bevorzugt verlaufen die Zwischenringe 39 und 39', insbesondere mit Bezug auf die vorbeschriebene Projektion in die Vertikalebene VE, gekrümmt, wobei sich weiter bevorzugt in Umfangsrichtung jeweils eine Wellenform der Zwischenringe ergibt, mit zwei diametral gegenüberliegenden konkaven Krümmungsbereichen und zwei in Umfangsrichtung um 90 Grad hierzu versetzten, diesbezüglich ebenfalls diametral gegenüberliegenden konvexen Krümmungsbereichen. Es ergibt sich so umlaufend ein Zwischenring 39 beziehungsweise 39' in Art eines gewellten Federringes.

Bevorzugt sind die Zwischenringe 39 und 39' gleich gestaltet, insbesondere bezüglich ihrer in Umfangsrichtung betrachteten Wellenform. Dabei können gemäß dem dargestellten Ausführungsbeispiel die Zwischenringe 39 in Umfangsrichtung gleich ausgerichtet sein, während die Zwischenringe 39' um die Längsachse y um bevorzugt 90 Grad relativ zu den Zwischenringen 39 versetzt sein können.

In einer Richtung r (oder alternativ auch in Richtung r') der Längsachse y betrachtet, verlaufen zwei unmittelbar aufeinander folgende Abschnitte der Zwischenringe 39 und 39' gegensinnig gekrümmt, sodass mit Blick beispielsweise in Richtung r dem konkaven Krümmungsbereich des Zwischenringes 39' mit Bezug auf die Projektion in die Vertikalebene VE ein konvexer Krümmungsbereich des folgenden Zwischenringes 39 gegenüberliegt. Es ergibt sich hier ein maximaler Abstand a zwischen den Zwischenringen 39 und 39', dies insbesondere zwischen den Krümmungs-Wendebereichen 44, die in der Projektionsebene gemäß den Darstellungen entlang der Längsachse y angeordnet sind.

Wie weiter aus den Darstellungen zu erkennen, verlaufen die unmittelbar in Richtung r hintereinander angeordneten Zwischenringe 39 und 39', betrachtet jeweils in Richtung r beziehungsweise r', von einer quer zur Längsachse y ausgerichteten und sich zwischen diesen Zwischenringen 39 und 39' erstreckenden Mittelebene E' jeweils konkav oder jeweils konvex gekrümmt, wobei sich zwischen den in der jeweiligen Richtung r beziehungsweise r' betrachteten konvexen Krümmungsbereichen der maximale Abstand a einstellt und zwischen den aufeinander zu gerichteten konkaven Krümmungsbereichen ein minimaler Abstand a'.

Bevorzugt sind die Federbeine 11 so angeordnet, dass diese in Richtung der Längsachse y aufeinander folgende Zwischenringe 39 und 39' im Bereich ihrer konvexen Krümmungs-Wendebereiche 44 verbinden. Auch die Verbindung des unteren Federringes 9 beziehungsweise des oberen Federringes 10 mit dem in Richtung r beziehungsweise r' folgenden Zwischenring 39 beziehungsweise 39' erfolgt bevorzugt im konvexen Krümmungs-Wendebereich 44 des Zwischenringes.

Bezüglich der Krümmung kann es sich um einen gleichmäßigen Anstieg entlang einer Mittellängsachse z der Zwischenringe handeln. In einer Abwicklung eines Zwischenringes 39 beziehungsweise 39' kann sich eine langgestreckte gleichmäßige Wellenform bezüglich dieser Mittellängsachse z ergeben. Dabei kann sich eine Steigung m im Mittel von etwa 7 bis 10, weiter etwa 8 bis 9, in Abhängigkeit von einem sich auf die Mittellängsachse z beziehenden Radiusmaß e und weiter in Abhängigkeit von einem Steigungsmaß s der Mittellängsachse z in Richtung der Längsachse y, ergeben, was weiter zu einer mittleren Steigung von etwa 10 bis 13 Prozent, weiter etwa 11 bis 12 Prozent führen kann.

## Patentansprüche

1. Kunststofffeder (8) mit einem unteren Federring (9) und einem oberen Federring (10), die im Wesentlichen koaxial zueinander angeordnet sind, wobei eine durch die Federringe (9, 10) jeweils aufgespannte Ebene (E) sich im Wesentlichen senkrecht zu einer Längsachse (x) der Kunststofffeder (8) erstreckt und wobei darüber hinaus die Federringe (9, 10) durch sich über mehr als 90° in Umfangsrichtung erstreckende Federbeine (11) einfederbar miteinander verbunden sind, wobei die Federbeine (11) in einem Übergangsabschnitt (12) in den unteren und/oder oberen Federring (9, 10) einlaufen, wobei weiter ein Federbein (11) eine dem gekrümmten Verlauf des Federbeins (11) folgende Mittellängsachse (z) aufweist, wobei der Übergangsabschnitt (12) bezogen auf eine Einlaufebene (A) senkrecht zu der Mittellängsachse (z) im Einlaufbereich in den Federring (9, 10) eine um 30 Prozent oder mehr größere Breite (b) aufweist als in einem Querschnittsbereich etwa in der Mitte der Längserstreckung des Federbeins (11), **dadurch gekennzeichnet, dass** jedes Federbein (11) mit Bezug auf einen Querschnitt senkrecht zu der Mittellängsachse (z) einen Reduzierabschnitt (32) aufweist, dass der Reduzierabschnitt (32) eine bezogen auf die Längsachse (y) betrachtete erste radiale Dicke (d') aufweist, die dem 0,3- bis 0,95-Fachen der Dicke (d) des nicht reduzierten Abschnitts des Federbeins (11) entspricht und dass jeder Reduzierabschnitt (32) sich mit Bezug auf eine Ansicht von radial außen aus einem einen spitzen Winkel aufweisenden Zwickelbereich zwischen dem Federbein (11) und dem jeweiligen Federring (9, 10) füllenden Dreieckabschnitt (33) und einen sich hieran anschließenden, im Wesentlichen in Längserstreckung des Federbeins (11) sich erstreckenden Ast (34) zusammensetzt, wobei der Ast (34) eine zumindest annähernd über die Längserstreckung gleichbleibende Breite (b') aufweist, die etwa dem 0,1 - bis 0,5-Fachen der in selber Richtung betrachteten Gesamtbreite (b") des Federbeins (11) einschließlich des Reduzierabschnittes (32) in diesem Bereich entspricht, wobei darüber hinaus jedes Federbein (11) auch einen ersten, einem stumpfen Winkel zwischen dem Federbein (11) und dem jeweiligen Federring (9, 10) zugeordneten Einlaufradius (38) aufweist, der gegenüber einem zweiten Einlaufradius (37) maßlich größer gewählt ist, etwa dem 1,5- bis 5-Fachem des zweiten Einlaufradius (37) entspricht.

2. Kunststofffeder nach Anspruch 1, **dadurch gekennzeichnet, dass** nur zwei Federbeine (11) vorgesehen sind und dass die Federbeine (11) nur mit den Federerringen (9, 10) verbunden sind.

3. Kunststofffeder nach einem der vorhergehenden Ansprüche, **dadurch gekennzeichnet, dass** der Einlaufbereich gesehen von radial außen und bezogen auf eine Umfangsrichtung des Federrings (9, 10) auf einer Seite einen ersten Einlaufradius (38) aufweist und in Umfangsrichtung gegenüberliegend einen zweiten Einlaufradius (37), wobei der zweite Einlaufradius (37) deutlich kleiner ist als der erste Einlaufradius (38).

4. Kunststofffeder nach Anspruch 3, **dadurch gekennzeichnet, dass** der zweite Einlaufradius (37) bezogen auf den Querschnitt in der Einlaufebene (A) an dem Reduzierabschnitt (32) des Querschnitts ausgebildet ist.

5. Kunststofffeder nach einem der Ansprüche 3 bis 6, **dadurch gekennzeichnet, dass** der Reduzierabschnitt (32) in der Ansicht von radial außen im Wesentlichen dreieckförmig mit in Umfangsrichtung gegenüberliegend gerundeten Konturen (35, 36) ausgebildet ist.

6. Kunststofffeder nach einem der vorhergehenden Ansprüche, **dadurch gekennzeichnet, dass** der Reduzierabschnitt (32) in Fortsetzung der Längserstreckung des Federbeins (11) den Ast (34) etwa gleichbleibender Breitenerstreckung aufweist, wobei die Breitenerstreckung gegenüber einer größten Breite (b) in dem Dreieckbereich (33) der Hälfte oder weniger entspricht.

7. Kunststofffeder nach Anspruch 6, **dadurch gekennzeichnet, dass** der Ast (34) sich nur über einen Teil der Längserstreckung des Federbeins (11) erstreckt.

8. Kunststofffeder nach einem der vorhergehenden Ansprüche, **dadurch gekennzeichnet, dass** gegenüberliegend ausgehend von dem oberen Federring (10) ein zweiter Dreiecksbereich (33) und/oder Ast (34) ausgeformt ist.

9. Kunststofffeder nach Anspruch 8, **dadurch gekennzeichnet, dass** die Äste (34) sich in der Längserstreckung teilweise überdecken.

## Claims

1. A plastic spring (8) comprising a lower spring ring (9) and an upper spring ring (10), which are arranged essentially coaxially to one another, wherein a plane (E), which is in each case spanned by the spring rings (9, 10), extends essentially perpendicular to a longitudinal axis (x) of the plastic spring (8), and wherein, in addition, the spring rings (9, 10) are connected to one another compressibly by means of spring legs (11), which extend over more than 90° in the circumferential direction, wherein the spring legs (11) run into the lower and/or upper spring ring (9, 10) in a transition portion (12), wherein a spring leg (11) further has a central longitudinal axis (z), which follows the curved progression of the spring leg (11), wherein the transition portion (12), based on a run-in plane (A) perpendicular to the central longitudinal axis (z) in the run-in region into the spring ring (9, 10), has a width (b), which is larger by 30 percent or more than in a cross sectional region approximately in the center of the longitudinal extension of the spring leg (11), **characterized in that** each spring leg (11) has a reducing portion (32) with respect to a cross section perpendicular to the central longitudinal axis (z), that the reducing portion (32) has a first radial thickness (d'), viewed with respect to the longitudinal axis (y), which corresponds to 0.3- to 0.95-times the thickness (d) of the non-reduced portion of the spring leg (11), and that with respect to a view radially from the outside, each reducing portion (32) consists of a triangle portion (33), which has an acute angle and fills a gusset region between the spring leg (11) and the respective spring ring (9, 10), and a branch (34), which adjoins thereon and extends essentially in the longitudinal extension of the spring leg (11), wherein the branch (34) has a width (b'), which remains constant at least approximately over the longitudinal extension and which corresponds approximately to 0.1- to 0.5-times the total width (b") of the spring leg (11), viewed in the same direction, including the reducing portion (32) in this region, wherein, each spring leg (11) moreover also has a first run-in radius (38), which is assigned to an obtuse angle between the spring leg (11) and the respective spring ring (9, 10), and which, with respect to a second run-in radius (37), is selected to be dimensionally larger, and corresponds approximately to 1.5- to 5-times the second run-in radius (37).

2. The plastic spring according to claim 1, **characterized in that** only two spring legs (11) are provided and that the spring legs (11) are only connected to the spring rings (9, 10).

3. The plastic spring according to one of the preceding claims, **characterized in that**, viewed radially from the outside and based on a circumferential direction of the spring ring (9, 10), the run-in region has a first run-in radius (38) on one side, and, located oppositely in the circumferential direction, a second run-in radius (37), wherein the second run-in radius (37) is significantly smaller than the first run-in radius (38).

4. The plastic spring according to claim 3, **characterized in that** the second run-in radius (37), based on the cross section in the run-in plane (A), is formed at a reducing portion (32) of the cross section.

5. The plastic spring according to one of the claims 3 to 6, **characterized in that** in the view radially from the outside, the reducing portion (32) is formed to be essentially triangular, with rounded contours (35, 36) located oppositely in the circumferential direction.

6. The plastic spring according to one of the preceding claims, **characterized in that** in continuation of the longitudinal extension of the spring leg (11), the reducing portion (32) has a branch (34) of approximately constant width extension, wherein the width extension with respect to a largest width (b) in the triangle region (33) corresponds to one-half or less.

7. The plastic spring according to claim 6, **characterized in that** the branch (34) extends only over a part of the longitudinal extension of the spring leg (11).

8. The plastic spring according to one of the preceding claims, **characterized in that** a second triangle region (33) and/or branch (34) is molded located oppositely, starting at the upper spring ring (10).

9. The plastic spring according to claim 8, **characterized in that** the branches (34) partially overlap in the longitudinal extension.

## Revendications

1. Ressort en matière plastique (8) avec une bague élastique inférieure (9) et une bague élastique supérieure (10), qui sont disposées essentiellement coaxialement l'une par rapport à l'autre, un plan (E) tendu par les rondelles élastiques (9, 10) s'étendant essentiellement perpendiculairement à un axe longitudinal (x) du ressort en matière plastique (8) et les bague élastiques (9, 10) sont reliées l'une à l'autre de manière élastique par des jambes de force à ressort (11) s'étendant sur plus de 90° dans la direction périphérique, les jambes de force à ressort (11) pénétrant dans la bague élastique inférieure et/ou supérieure (9, 10) dans une section de transition (12), une jambe de force à ressort (11) présentant en outre un axe longitudinal médian (z) qui suit le tracé courbe de la jambe de force à ressort (11), la section de transition (12) présentant, par rapport à un plan d'entrée (A) perpendiculaire à l'axe longitudinal médian (z), dans la zone d'entrée dans la rondelle élastique (9, 10) présente une largeur (b) supérieure de 30 pour cent ou plus à celle dans une zone de section transversale située approximativement au milieu de l'extension longitudinale de la jambe de force à ressort (11), **caractérisée en ce que** chaque jambe de force à ressort (11) présente une section de réduction (32) par rapport à une section transversale perpendiculaire à l'axe longitudinal central (z), **en ce que** la section de réduction (32) présente une première épaisseur radiale (d'), considérée par rapport à l'axe longitudinal (y), qui correspond à 0,3 à 0,95 fois l'épaisseur (d) de la section non réduite de la jambe de force à ressort (11) et **en ce que** chaque section de réduction (32) s'étend, par rapport à une vue de l'extérieur dans le sens radial, à partir d'une zone de gousset présentant un angle aigu entre la jambe de force à ressort (11) et la bague à ressort respective (9, 10) et d'une branche (34) qui s'y raccorde et qui s'étend essentiellement dans l'étendue longitudinale de la jambe de force à ressort (11), la branche (34) présentant une largeur (b') au moins approximativement constante sur l'étendue longitudinale, qui correspond à environ 0,1 à 0,5 fois la largeur totale (b") de la jambe de force à ressort (11) considérée dans la même direction, y compris la section de réduction (32) dans cette zone, chaque jambe de force à ressort (11) présentant en outre un premier rayon d'entrée (38) associé à un angle obtus entre la jambe de force à ressort (11) et la rondelle élastique (9, 10) respective, qui est choisi plus grand en dimension par rapport à un deuxième rayon d'entrée (37), et qui correspond environ à 1,5 à 5 fois le deuxième rayon d'entrée (37).

2. Ressort en matière plastique selon la revendication 1, **caractérisé en ce que** seules deux jambes de force à ressort (11) sont prévues et **en ce que** les jambes de force à de ressort (11) sont reliées uniquement aux anneaux de ressort (9, 10).

3. Ressort en matière plastique selon l'une des revendications précédentes, **caractérisé en ce que** la zone d'entrée, vue radialement de l'extérieur et par rapport à une direction circonférentielle de la bague élastique (9, 10), présente un premier rayon d'entrée (38) sur un côté et un deuxième rayon d'entrée (37) opposé dans la direction circonférentielle, le deuxième rayon d'entrée (37) étant nettement plus petit que le premier rayon d'entrée (38).

4. Ressort en matière plastique selon la revendication 3, **caractérisé en ce que** le deuxième rayon d'entrée (37) par rapport à la section transversale est formé dans le plan d'entrée (A) au niveau de la partie de réduction (32) de la section transversale.

5. Ressort en matière plastique selon l'une quelconque des revendications 3 à 6, **caractérisé en ce que** la section de réduction (32), vue de l'extérieur dans le sens radial, a une forme sensiblement triangulaire avec des contours (35, 36) arrondis opposés dans le sens circonférentiel.

6. Ressort en matière plastique selon l'une quelconque des revendications précédentes, **caractérisé en ce que** la section de réduction (32) présente, dans le prolongement de l'extension longitudinale de la jambe de force à ressort (11), la branche (34) d'extension en largeur sensiblement constante, l'extension en largeur correspondant à la moitié ou moins d'une largeur maximale (b) dans la zone triangulaire (33).

7. Ressort en matière plastique selon la revendication 6, **caractérisé en ce que** la branche (34) ne s'étend que sur une partie de l'extension longitudinale de la jambe de force à ressort (11).

8. Ressort en matière plastique selon l'une quelconque des revendications précédentes, **caractérisé en ce qu'**une deuxième zone triangulaire (33) et/ou branche (34) est formée en vis-à-vis à partir de l'anneau élastique supérieur (10).

9. Ressort en matière plastique selon la revendication 8, **caractérisé en ce que** les branches (34) se recouvrent partiellement dans l'extension longitudinale.
